# EUROPÄISCHE PATENTSCHRIFT

(11) **EP 2 678 579 B1**
(45) Veröffentlichungstag und Bekanntmachung des Hinweises auf die Patenterteilung: **18.02.2015**
(21) Anmeldenummer: 11802282.1
(22) Anmeldetag: 15.12.2011
(51) Int. Cl.: F16D 65/12

(54) **BREMSSCHEIBE UND DEREN HERSTELLUNGSVERFAHREN**
BRAKE DISC AND PRODUCTION METHOD THEREOF
DISQUE DE FREIN ET PROCÉDÉ DE FABRICATION DUDIT DISQUE DE FREIN

(30) Priorität: 25.02.2011 DE 102011012320
(43) Veröffentlichungstag der Anmeldung: 01.01.2014
(73) Patentinhaber: Daimler AG, 70327 Stuttgart (DE)
(72) Erfinder: ÖZER, Ihsan, 71069 Sindelfingen (DE)
(74) Vertreter: JENSEN & SON
(86) Internationale Anmeldenummer: PCT/EP2011/006336
(87) Internationale Veröffentlichungsnummer: WO 2012/113431

(56) Entgegenhaltungen:
- EP-A1- 0 626 228
- DE-A1- 2 318 098
- DE-B3- 10 345 000
- DE-C1- 3 718 647

## Beschreibung

Die Erfindung betrifft eine Bremsscheibe für ein Kraftfahrzeug und ein Herstellungsverfahren, das insbesondere eine Aufrauung der Reibringoberfläche der Bremsscheibe umfasst.

Kraftfahrzeug-Bremsscheiben, die zur Verringerung des Verschleißes der Reibringoberfläche eine Beschichtung tragen, sind aus dem Stand der Technik bekannt.

So beschreibt die DE 10 342 743 A1 ein Verfahren zur Herstellung einer Bremsscheibe für ein Fahrzeug sowie die Bremsscheibe selbst, die einen Grundkörper umfasst, der eine mindestens im Bereich der äußeren Oberfläche verschleißfeste Schicht trägt, die als Reibschicht dient. Ferner liegt ein Bereich aus einem Material zur Haftvermittlung zwischen dem Grundkörper und der verschleißfesten äußeren Schicht vor, wobei der Bereich aus dem Material zur Haftvermittlung und die verschleißfeste äußere Schicht als Graduellenschicht ausgebildet ist, deren Zusammensetzung sich in Schichtdickenrichtung ändert.

Ferner ist aus der DE 10 2004 016 098 A1 eine Bremsscheibe bekannt, die ebenfalls einen Grundkörper aufweist, der mindestens partiell im Bereich seiner äußeren Oberfläche eine verschleißfeste Schicht trägt, die als Reibschicht dient. Eine Zwischenschicht ist als haftvermittelnde Schicht und/oder als Korrosionsschutzschicht zwischen dem Grundkörper und der äußeren verschleißfesten Schicht vorgesehen, die galvanisch aufgebracht wird.

Das Aufbringen der haftvermittelnden Schicht ist mit zusätzlichen Prozessschritten und Materialaufwand verbunden, dabei wird das Haftungsproblem bei den beschichteten Bremsscheiben dennoch zumeist nicht zufriedenstellend gelöst. Es besteht die Gefahr, dass sich die Beschichtung, gegebenenfalls samt Zwischenschicht löst bzw. abplatzt, da die meist stoffschlüssige Verbindung zwischen den Schichten untereinander und mit der Reibflächenoberfläche keine hinreichend beständige Bindung bildet, wenn die Bremsscheibe bei Benutzung stark belastet wird.

Um die Kontaktfläche zwischen der Reibringoberfläche und einer schützenden Beschichtung daher zu verbessern, wurden bereits Bestrebungen unternommen, die Reibringoberfläche mechanisch oder durch Laserstrukturieren so zu behandeln, dass die Kontaktfläche vergrößert wird.

Das mechanische Behandeln wird in der EP 1336054 B1 aufgegriffen, die das Abdrehen eines Bremsscheibenrohlings um genau den Betrag empfiehlt, den eine Beschichtungsdicke einnehmen soll, gefolgt vom Reinigen der Bremsscheibe von Bearbeitungsrückständen, etwa mechanisch, und anschließendem Aufrauen durch Bestrahlen mit feinem Korund oder einem Strahlgut mit vergleichbaren Eigenschaften.

Laserstrukturieren der Oberfläche eines Reibrings ist ein Prozess, der recht zeitaufwändig ist, eine hohe Wärmeeinflusszone schafft und Kraterbildungen an den Rändern des Bauteils begünstigt, so dass hierdurch keine zufriedenstellende Strukturierung der Reibringoberfläche geschaffen wird.

Grundsätzlich wird das Behandeln von Oberflächen metallischer Werkstücke, die mit Schichten aus Metall, Kunststoff oder Gummi überzogen werden sollen, schon in der Offenlegungsschrift DE 2 318 098 adressiert: Dort wird aufgegriffen, dass diese Werkstücke vielfach vor dem Aufbringen der Beschichtung aufgeraut oder chemisch etwa durch Ätzen präpariert werden müssen, wobei eine nachteilig nicht gleichmäßige Oberflächenstruktur entsteht. Dieser Nachteil soll durch den Einsatz von Elektronenstrahlen überwunden werden, da durch mehr oder weniger hohe Energiezufuhr und Bündelung der Elektronenstrahlung eine Aufrauung oder gar Aufschmelzen bestimmter Dickenbereiche und -zonen der Oberfläche erreicht werden kann, wobei durch Behandlung in Sauerstoff-haltiger Atmosphäre Oxide und Schlacken entstehen, die die Hafteigenschaften der vergrößerten Oberfläche wieder beeinträchtigen und daher nach der Elektronenstrahlbehandlung mit ausgewählten Chemikalien abgereinigt, insbesondere abgeätzt werden müssen.

Ausgehend von diesem Stand der Technik ergibt sich die Aufgabe, ein verbessertes Verfahren zur Behandlung einer Reibringoberfläche zu schaffen, um diese mit einer Schutzbeschichtung besser und dauerhafter verbindbar zu gestalten.

Diese Aufgabe wird durch ein Verfahren mit den Merkmalen des Anspruchs 1 gelöst.

Weiter ergibt sich die Aufgabe, eine Bremsscheibe zu schaffen, die eine verbesserte Verbindung zwischen einer Reibringoberfläche des Grundkörpers und einer Schutzbeschichtung aufweist.

Diese Aufgabe wird durch die Bremsscheibe mit den Merkmalen des Anspruchs 4 gelöst.

Weiterbildungen des Verfahrens und der Vorrichtung sind in den jeweiligen Unteransprüchen ausgeführt.

Das erfindungsgemäße Verfahren zur Herstellung einer Bremsscheibe aus einem Grundkörper, der eine Reibringoberfläche aufweist, die mit einer Beschichtung zu versehen ist, sieht in einer ersten Ausführungsform die Schritte vor, zunächst den Grundkörper bereitzustellen und sodann die Reibringoberfläche aufzurauen, indem ein Elektronenstrahl derart auf die Reibringoberfläche gerichtet wird, dass dabei in der Reibringoberfläche eine definierte Anzahl von Vertiefungen pro Quadratmillimeter Reibringoberfläche erzeugt wird. Dabei ist der Elektronenstrahl hinsichtlich seiner Energie, Richtung und Beabstandung zur zu bearbeitenden Oberfläche derart eingestellt, dass die Anordnung der Vertiefungen zueinander auf vorbestimmte Weise erfolgt und jede Vertiefung eine vorbestimmte Tiefe und Form aufweist.

Ohne dass ein Ätzschritt oder ein sonstiger Reinigungs- oder Zwischenschritt ausgeführt werden muss, kann nun das Aufbringen einer Reibringoberflächenbeschichtung erfolgen. So kann ein Ätzen zur Entfernung von Schlackerückständen auf der aufgerauten Oberfläche entfallen, wenn das Elektronenstrahlverfahren etwa in einer sauerstofffreien Atmosphäre oder im Vakuum durchgeführt wird. Aber selbst wenn dies nicht der Fall ist, und aufgrund des Vorhandenseins von Sauerstoff während der Bestrahlung mit Sauerstoff Schlacken etc. an der Reibringoberfläche entstehen, ist ein Ätzschritt nicht erforderlich, da die nachfolgend durchgeführte Beschichtungsaufbringung derart ist, dass eventuell vorhandene Schlackenrückstände hierdurch entweder verdrängt oder mit ins Gefüge eingebaut werden.

So wird vorteilhaft ein prozesssicheres und reproduzierbares Verfahren zur Optimierung der Reibringoberfläche geschaffen, die es ermöglicht, durch die um das zwei- bis sechsfache vergrößerte Oberfläche des Reibrings durch mechanisches Verklammern besser mit dem die Beschichtung ausbildenden Material zu verbinden. Der mit dem Elektronenstrahl ausgeführte Strukturiervorgang erfordert dabei vorteilhaft nur kurze Taktzeiten und erlaubt einen anschließenden optimierten graduellen Aufbau der Beschichtung.

Dazu ist der Elektronenstrahl ein scharf gebündelter und hoch beschleunigter Elektronenstrahl, der es erlaubt, die Vertiefungen auf der Reibringoberfläche mit gewünschter Anzahl und Form einzubringen. Zur Vermeidung der Schlackenentstehung an der Reibringoberfläche kann, wie oben bereits erwähnt, die Bestrahlung der Reibringoberfläche unter einer sauerstoffarmen Atmosphäre, insbesondere in Inertgasatmosphäre, erfolgen.

Das anschließende Aufbringen der Reibringoberflächenbeschichtung, die Hartstoffe in der Form von Carbiden oder Oxid-Keramiken aufweist, auf den Bremsscheibengrundkörper, der aus einem metallischen Werkstoff wie insbesondere Grauguss, Stahl oder Aluminiumlegierung besteht, erfolgt mittels Hochgeschwindigkeitsflammspritzen, Plasmaspritzen, Kaltgasspritzen oder durch Lichtbogendrahtspritzen. Diese Aufbringverfahren ermöglichen eine Beschichtung direkt nach der Aufrauung, indem die eventuell vorhandenen Schlackenrückstände entweder verdrängt oder mit ins entstehende Gefüge eingebaut werden.

Die Karbide oder die Oxid-Keramik der Beschichtung liegen dabei durch eine Binderphase oder eine Matrix gebunden vor, die durch Legierungen auf der Basis von Chrom, Nickel und/oder Eisen gebildet sind. Hierzu zählen insbesondere auch Chrom- oder Chrom-Nickel-Stähle.

Die mit dem erfindungsgemäßen Verfahren geschaffene Bremsscheibe aus einem Grundkörper mit einer Reibringoberfläche, die mit einer Beschichtung versehen ist, zeigt folglich an der Reibringoberfläche des Grundkörpers eine vorbestimmte Anzahl pro Quadratmillimeter elektronengestrahlter Vertiefungen, die gemäß einer vorbestimmten Anordnung zueinander oder sogar als Muster in die Reibringoberfläche eingebracht sind. Jede Vertiefung hat eine vorbestimmte Tiefe und Form. Vorteilhaft bildet dann die Beschichtung zwischenschichtfrei mit den Vertiefungen der Reibringoberfläche eine kombinierte form- und stoffschlüssige Verbindung.

Durch die Vertiefungen und als Funktion von deren Anzahl, Form und Tiefe ergibt sich eine um das Zwei- bis Sechsfache vergrößerte Reibringoberfläche, verglichen mit einer Reibringoberfläche ohne Vertiefungen.

Der Grundkörper der Bremsscheibe besteht aus einem metallischen Werkstoff, wobei ein Grauguss bevorzugt ist, der sich besonders geeignet auf die erfindungsgemäße Weise bearbeiten lässt.

Die Beschichtung der Reibringoberfläche weist, bezogen auf ihr Gesamtgewicht der Beschichtung,
- 70 - 85 Gew.-% WC, 7 -12 Gew.-% Co, 3 - 5 Gew.-% Cr, 0,5 -2 Gew.-% Ni, oder
- 75 - 85 Gew.-% WC, 7 -12 Gew.-% Co, 3 - 5 Gew.-% Cr, 0,001 bis 1 Gew.-% Ni, oder
- 65 - 85 Gew.-% WC, 15 - 30 Gew.-% Cr₃C₂, 5-12 Gew.-% Ni, oder
- 70 - 75 Gew.-% WC, 18 - 22 Gew.-% Cr₃C₂, 5 - 8 Gew.-% Ni,
sowie Verunreinigungen auf.

Bei den oben genannten Keramiken in der Beschichtung der Reibringoberfläche werden etwa Oxid-Keramiken gewählt, insbesondere Magnesiumoxid, Zirkoniumdioxid-, Titandioxid- und/oder Aluminiumoxid-haltige Beschichtungen.

Die Beschichtung der Reibringoberfläche kann auch eine Oxid-Keramik und eine Metallmatrix als Verbundwerkstoff aufweisen, wobei die Oxid-Keramik und die Metallmatrix im Verhältnis von 50 - 80% zu 20 - 50% vorliegen. Die Metallmatrix ist beispielweise aus Cr/Ni-Stahl gebildet.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands.

Dabei zeigen:
- Fig. 1: eine perspektivische Ansicht einer Bremsscheibe während des Elektronenstrahlens,
- Fig. 2: eine elektronenmikroskopische Querschnittsansicht von einer Vertiefung,
- Fig. 3a: eine schematische Seitenschnittansicht durch zwei Vertiefungen in der mit einer Beschichtung versehenen Reibringoberfläche gemäß einer Ausführungsform der Erfindung,
- Fig. 3b: eine schematische Seitenschnittansicht durch eine Vertiefung in der mit einer Beschichtung versehenen Reibringoberfläche mit Kraftvektoren gemäß einer Ausführungsform der Erfindung,
- Fig. 4a: eine schematische Seitenschnittansicht einer mit einer Beschichtung versehenen Reibringoberfläche nach Stand der Technik,
- Fig. 4b: eine schematische Seitenschnittansicht der mit einer Beschichtung versehenen Reibringoberfläche nach Stand der Technik mit Kraftvektoren,

- Fig. 5a: eine elektronenmikroskopische Aufnahme der Reibringoberfläche mit den Vertiefungen gemäß einer Ausführungsform der Erfindung,
- Fig. 5b: eine vergrößerte elektronenmikroskopische Aufnahme der Reibringoberfläche mit den Vertiefungen gemäß einer Ausführungsform der Erfindung,

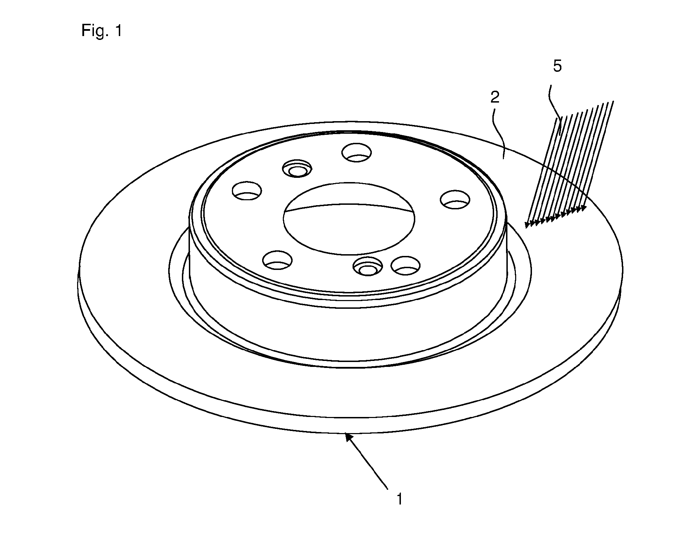

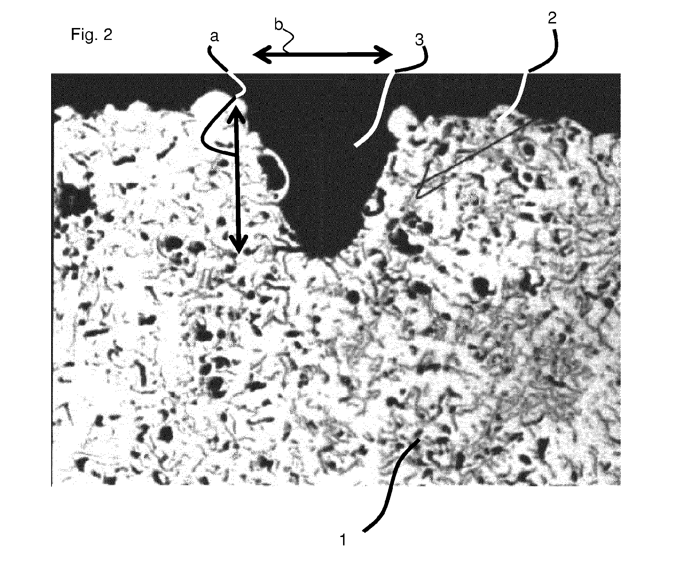

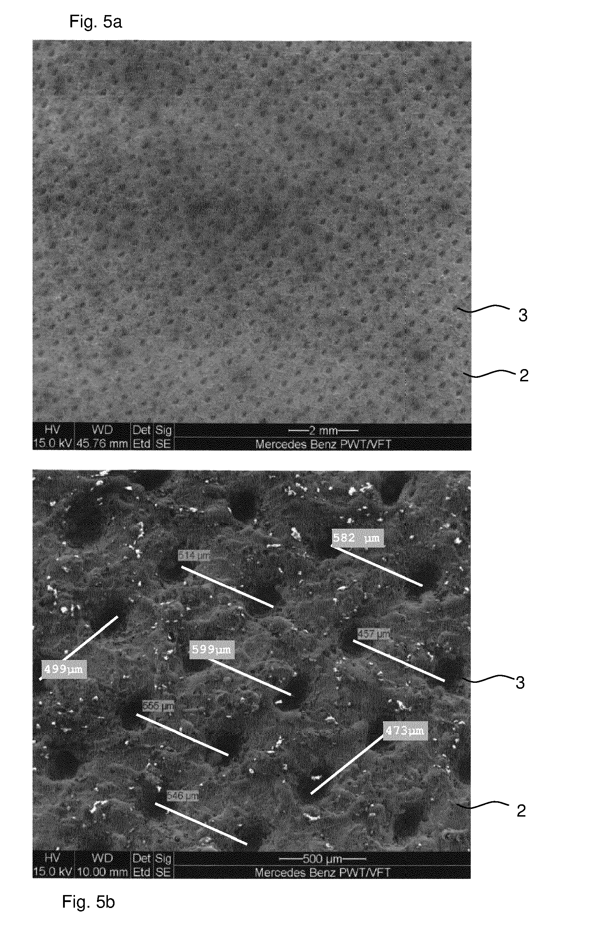

Die Erfindung bezieht sich auf ein Verfahren zur Herstellung einer Bremsscheibe aus einem Grundkörper 1, der eine Reibringoberfläche 2 aufweist, wie in Fig. 1 zu sehen ist. Auf die Reibringoberfläche 2 soll eine verschleißfeste Beschichtung aufgebracht werden. Damit diese besser haftet, wird die Reibringoberfläche 2 vor dem Beschichten aufgeraut, indem Elektronenstrahlen 5 auf die Reibringoberfläche 2 gerichtet werden, mittels derer in der Reibringoberfläche 2 eine definierte Anzahl von Vertiefungen 3 (die in den elektronenmikroskopischen Aufnahmen aus Fig. 2 und Fig. 5a, b zu sehen sind) pro mm² Reibringoberfläche 2 eingebracht wird, wobei die Anordnung der Vertiefungen 3 zueinander vorbestimmt ist und wobei jede Vertiefung 3 eine vorbestimmte Tiefe und Form aufweist.

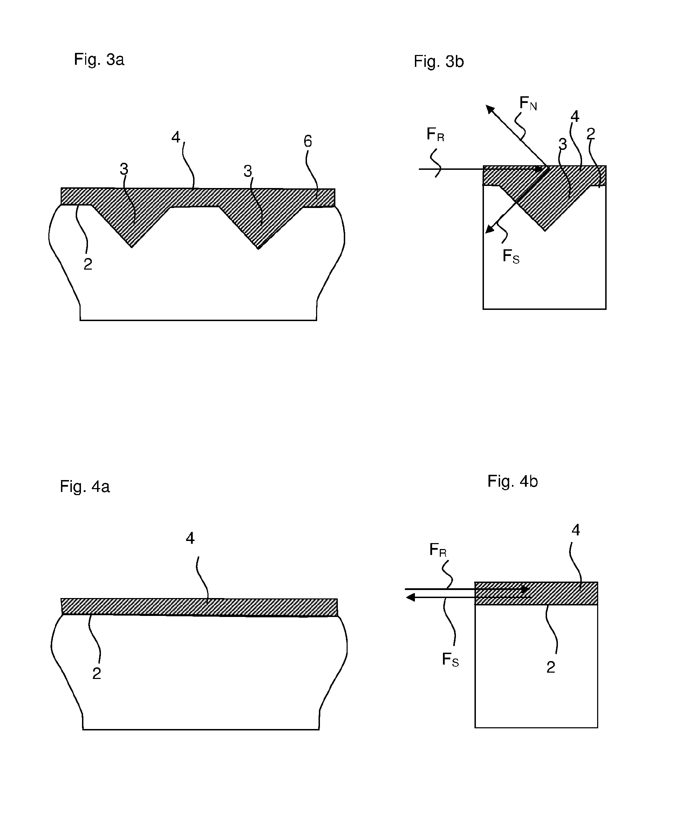

Danach wird, ohne die aufgeraute Reibringoberfläche einem Ätzschritt zu unterziehen, die Verschleißschutzbeschichtung 4 aufgebracht, die in Fig. 3a und 3b zu sehen ist. Die Oberflächenqualität des Reibrings kann somit sich durch die gezielt erzeugten Oberflächenkonturen, deren definierte Anzahl und deren genau definierten Geometrien beeinflusst werden, so dass eine gewünschte Oberflächengeometrie gezielt für den zu beschichtenden Reibring erzeugt werden kann.

Das Aufrauen der Reibringoberflächen 2 erfolgt durch die gerichteten Elektronenstrahlen 5 in Form einzelner gestrahlten Elektronen. Die Elektronenstrahlbearbeitung basiert auf der Energieumsetzung beim Auftreffen des scharf gebündelten und hoch beschleunigten Elektronenstrahls 5 auf die zu strukturierende Oberfläche 2. Die Elektronen werden beim Auftreffen an der Grenzfläche der Oberfläche 2 abgebremst, wobei ihre kinetische Energie in einem Brennfleck in Wärmeenergie umgewandelt wird. Die Eindringtiefe der Elektronen in die Grenzfläche ist eine Funktion ihrer Geschwindigkeit und somit der Beschleunigungsspannung sowie der Dichte des beaufschlagten Materials. Durch die hohe Leistungsdichte im Brennfleck wird in diesem Bereich das Material innerhalb weniger Mikrosekunden aufgeschmolzen und zum Teil verdampft. Durch den entstehenden Dampfdruck werden Schmelzetröpfchen vom Strahlauftreffpunkt nach Außen verdrängt. Wird der Elektronenstrahl unmittelbar nach dem Durchdringen des Werkstücks abgeschaltet, so bleibt eine Kapillare bestehen.

Zur Vermeidung von Oxid- und Schlackenbildung im Bereich um den Brennfleck kann die Bestrahlung der Reibringoberfläche 2 unter einer sauerstoffarmen Atmosphäre, insbesondere in Inertgasatmosphäre erfolgen.

Die mittels Hochgeschwindigkeitsflammspritzen, Plasmaspritzen, Kaltgasspritzen oder Lichtbogendrahtspritzen auf die die Reibringoberfläche 2 des Grundkörpers 1 aufgebrachte Beschichtung 4 bildet dann zwischenschichtfrei mit der durch die Vertiefungen 3 aufgerauten Reibringoberfläche 4 eine kombinierte form- und stoffschlüssige Verbindung.

Somit, und dadurch, dass die relativ geringe Kontaktfläche zwischen der Beschichtung 4 und der Reinbringoberfläche 2 erhöht wurde, kann die Enthaftungs- bzw. Abplatzgefahr der Beschichtung 4 verringert werden. Die bislang undefinierte mechanische Verbindung zwischen einer Beschichtung und einer Reibringoberfläche konnte dadurch verbessert und optimiert werden. Das erfindungsgemäße Verfahren stellt eine prozesssichere und reproduzierbare Oberflächenoptimierung bereit, wobei durch eine je nach Auslegung der Oberflächenstruktur zwei- bis sechsfach vergrößerte Oberfläche eine bessere Haftung, bzw. mechanische Verbindung zwischen dem Bremsscheibengrundkörper 1 und der jeweiligen Beschichtung erzielt wird. Zudem ermöglicht der sehr schnelle Strukturiervorgang sehr kurze Taktzeiten sowie einen optimierten Schichtaufbau wie etwa einen graduellen Aufbau der Beschichtung.

Eine erfindungsgemäße Bremsscheibe wird aus dem Grundkörper 1 und der auf die Reibringoberfläche 2 aufgebrachten Beschichtung 4 gebildet. Der Grundkörper 1 ist aus einem metallischen Werkstoff, beispielsweise aus Grauguss. Als weitere Grundkörper-Werkstoffe kommen auch Stahl oder eine Leichtmetalllegierung beispielsweise auf Aluminiumbasis in Frage. Die Beschichtung 4 auf der Reibringoberfläche 2 besteht aus einem harten Material, welches als Verschleißschutzmaterial wirkt. Dafür geeignete Materialien sind Hartstoffe Carbide und/oder Oxid-Keramik. So eignen sich als Verschleißschutzbeschichtung einer Reibringoberfläche auch Cermets (Keramik-Metall-Verbundwerkstoffe), CMCs (keramische Faserverbundwerkstoffe) und MMCs (Metallmatrix-Verbundwerkstoffe mit eingebetteten Hartstoffpartikeln), die neben dem Verschleißschutz auch hervorragende tribologische Eigenschaften aufweisen.

Eine beispielhafte Beschichtung 4 bezieht sich auf in einer metallischen Matrix aus Nickel, Cobalt und/oder Chrom eingelagerte Carbide aus Wolfram und/oder aus Chrom.

Der WC-Anteil liegt hier im Bereich von 60 - 85 %. (Unter den Angaben in % sind, soweit nichts anderes angegeben, ist immer Gewichtsprozent zu verstehen).

Der Anteil an metallischer Matrix, die im Wesentlichen dazu dient, die eingeschlossenen Carbide zu binden, liegt im Bereich von 10 - 50 %, bevorzugt im Bereich von 15 - 25 %.

Dabei sind für die metallische Matrix insbesondere Legierungszusammensetzungen mit einem hohen Co-Anteil bevorzugt, wobei die Beschichtung insbesondere Anteile von 8 - 15 % Co, 2 - 6 % Cr und 0,001 - 3 % Ni sowie gegebenenfalls Spuren weiterer Metalle aufweist.

Eine typische bevorzugte Beschichtungszusammensetzung umfasst 70 - 85 % WC, 7 - 12 % Co, 3 - 5 % Cr und 0,5 - 2 % Ni, sowie Verunreinigungen. Eine weitere typische bevorzugte Beschichtungszusammensetzung umfasst 75 - 85 % WC, 7 -12 % Co, 3 - 5 % Cr und 0,001 bis 1 Ni, sowie Verunreinigungen.

Eine weitere Ausführungsform der Beschichtung 4 bezieht sich auf ein metallgebundenes Carbid WC-Co-Cr-Ni, das eine Zusammensetzung aus vorzugsweise ca. 10 Gew.-% Co, vorzugsweise ca. 4 Gew.-% Cr und vorzugsweise ca. 1 Gew.-% Ni und dem Rest WC aufweist.

Dabei kann in diesen Beschichtungs-Zusammensetzungen auch Cr zumindest teilweise als Carbid gebunden vorliegen.

Eine weitere zur Schaffung der Verschleißschutzbeschichtung gut geeignete metallische Matrix ist durch einen hohen Ni-Gehalt geprägt. Als wesentliche Bestandteile dieser Beschichtung treten als Hartstoffe WC und Cr₃C₂ auf, die zusammen einen Anteil von 70 - 90 % der Beschichtung ausmachen.

Für diese Art Verschleißschutzbeschichtung umfassen typische bevorzugte Beschichtungszusammensetzungen 65 - 85 % WC, 15 - 30 % Cr₃C₂ und 5 - 12 % Ni sowie Verunreinigungen oder 70 - 75 % WC, 18 - 22 % Cr₃C₂ und 5 - 8 % Ni sowie Verunreinigungen.

Eine bevorzugte Zusammensetzung einer derartigen Beschichtung WC-Cr₃C₂-Ni weist einen Anteil von ca. 73 Gew.-% WC, einen Anteil von ca. 20 Gew.-% Chromcarbid und einen Anteil von ca. 7 Gew.-% Nickel auf.

Auch aus einem Chromstahl können weitere geeignete Carbid-Beschichtungen geschaffen werden. Dabei bestehen die Hartstoffe im Wesentlichen aus Cr-Carbiden. Die bevorzugten Stähle weisen einen Chromanteil von 12 - 22 Gew.-% auf. Bevorzugt sind jedoch 15 - 20 % Cr.

In einer weiteren bevorzugten Ausgestaltung besteht der Grundkörper (1) aus einem metallischen Werkstoff, insbesondere aus einem Grauguss besteht und die Beschichtung (4) der Reibringoberfläche (2) aus Oxidkeramik, insbesondere ausgewählt aus der Gruppe Al₂O₃, ZrO₂, MgO und/oder TiO₂ und Metall, insbesondere Cr/Ni-Stahl.

Diese Beschichtungen lassen sich vorzugsweise mittels Hochgeschwindigkeitsflammspritzen, Plasmaspritzen, Kaltgasspritzen oder Lichtbogendrahtspritzen auf die Reibringoberfläche aufbringen. Das Hochgeschwindigkeitsflammspritzen eignet sich besonders zur Erzeugung einer Carbid-Beschichtung. Das Plasmaspritzen ist zur Erzeugung einer Beschichtung aus Keramik, Cermet oder Metall geeignet. Zur Erzeugung der Beschichtung aus Metall kommen auch das Kaltgasspritzen und das Lichtbogendrahtspritzen in Frage.

Beim Hochgeschwindigkeitsflammspritzen werden Spritzpartikel des Beschichtungswerkstoffs mit sehr hoher Geschwindigkeit auf die zu beschichtenden Reibringoberflächen 2 aufgebracht. Beim Plasmaspritzen wird in einen Plasmagasstrom der Beschichtungswerkstoff in Pulverform eingebracht, welcher durch das Plasma aufgeschmolzen und durch den Plasmagasstrom auf die zu beschichtenden Reibringoberflächen 2 aufgespritzt wird.

Beim Kaltgasspritzen wird der Beschichtungswerkstoff in Pulverform mit sehr hoher Geschwindigkeit auf die zu beschichtenden Reibringoberflächen 2 aufgespritzt. Der pulverförmige Beschichtungswerkstoff wird dabei auf eine so hohe Geschwindigkeit beschleunigt, dass er im Gegensatz zu anderen thermischen Spritzverfahren auch ohne vorangehendes An- oder Aufschmelzen beim Aufprall auf die zu beschichtenden Reibringoberflächen 2 eine dichte und fest haftende Schicht bildet.

Beim Lichtbogendrahtspritzen werden mittels eines Lichtbogens aufgeschmolzene Spritzpartikel des Beschichtungswerkstoffs mittels eines Zerstäubergases auf die zu beschichtenden Reibringoberflächen 2 aufgespritzt.

Die Spritzpartikel weisen jeweils einen hohen Energiegehalt auf, durch den der stoffschlüssige Verbund mit der Reibringoberfläche zustande kommt, während eventuell auf der Reibringoberfläche vorhandene Schlacken oder Oxide verdrängt oder mit in das entstehende Gefüge integriert werden und daher die Haftung der Beschichtung an der Reibringoberfläche nicht oder nur in geringem Ausmaß beeinträchtigen.

In Fig. 2 ist eine nach der Elektronenbestrahlung erzeugte Kontur einer Vertiefung 3 in der Oberfläche 2 eines Bremsscheibengrundkörpers 1 aus einem Grauguss GG-20 zu sehen. Die Vertiefung 3 hier weist an der Oberfläche 2 einen Durchmesser b von ca. 250 µm auf. Auch die Tiefe a der Vertiefung 3 beträgt ca. 250 µm. Die Oberfläche wurde an dieser Stelle durch die Abmessungen der Vertiefung etwa verdoppelt: Anstelle der Kreisfläche mit dem Durchmesser b tritt die Mantel- und Grundfläche der Vertiefung 3. Durch eine Vielzahl solcher Vertiefungen 3 kann außer dem Stoffschluss durch die Aufbringungsart zusätzlich eine mechanische Klammerung zwischen der Reibringoberfläche 2 und der Beschichtung 4 und damit eine deutlich festere Verbindung erzielt werden, wodurch auch die Haftfestigkeit der Beschichtung 4 an der Reibringoberfläche 2 deutlich erhöht wird. Verdeutlicht wird dies in den Fig. 3a bis 4b.

Während in Figuren 3a und 3b die durch die erfindungsgemäß ausgeführte Anbindung zwischen Beschichtung 4 und Reibringoberfläche 2 durch die Vertiefungen 3 optimierte Beanspruchung der Beschichtung 4 an der Reibringoberfläche 2 dargestellt ist, ist in Figuren 4a und 4b die ursprüngliche Beanspruchungsrichtung einer Beschichtung 4 nach dem Stand der Technik skizziert, die während des Bremsens durch Scherkräfte F_{S} aufgrund der auftretenden Reibkräfte F_{R} bestimmt wurde, die im Wesentlichen radial, bzw. parallel zur Reibringoberfläche in Umfangsrichtung ist. Die auf die ebene Reibringoberfläche 2 der Bremsscheibe ohne Oberflächenstrukturierung nach Stand der Technik aufgebrachte Beschichtung 4 ist dadurch verstärkter Scherbeanspruchung ausgesetzt, die ein Ablösen der Beschichtung 4 begünstigen kann.

Fig. 3a zeigt einen Bremsscheibenausschnitt mit in die Reibringoberfläche 2 eingebrachten Vertiefungen 3 vorbestimmter Tiefe, die mittels Elektronenstrahlen hergestellt wurden. Die daraufhin aufgebrachte Beschichtung 4 greift in die Vertiefungen 3 ein und ist damit stoff- und formschlüssig mit der Reibringoberfläche verbunden. Fig. 3b zeigt die Kraftzerlegung der während des Bremsvorgangs an der Beschichtung 4 angreifenden Reibkraft F_{R} in einen senkrecht und einen parallel zu einer Wand der Vertiefung 3 verlaufenden Kraftvektor F_{S} und F_{N}. Je nach erzeugter Konturgeometrie der Vertiefung 3 verläuft nun die Beanspruchungsrichtung teilweise in einer senkrechten Richtung, was die Scherbeanspruchung vermindert und insgesamt die Belastbarkeit der Beschichtung 4 deutlich erhöht.

Fig. 5a zeigt eine Übersichtsaufnahme einer gemäß der Erfindung erzeugten Reibringoberfläche 2 mit einer Vielzahl von Vertiefungen 3. Mit dem angegebenen Maßstab von 2 mm ist eine Vertiefungsdichte von etwa 4 Vertiefungen pro mm² zu entnehmen, die hier in einem Rauten bildenden Muster angeordnet sind. Die Anordnung der erzeugten Vertiefungen kann durch die hohe Genauigkeit des Elektronenstrahl-Verfahrens beliebig gewählt und ausgelegt werden.

In Fig. 5b ist eine vergrößerte Ansicht der gemäß der Erfindung erzeugten Reibringoberfläche 2 aus Fig. 5a zu sehen, die die Anordnung der Vertiefungen 3 verdeutlicht. Das Muster der Vertiefungen 3 kann als in parallelen Linien erzeugte Punkte betrachtet werden, wobei die Punkte auf einer Linie mit einem bestimmten Abstand voneinander angeordnet sind, und wobei die Punkte benachbarter Linien jeweils um die Hälfte des bestimmten Abstands versetzt zueinander angeordnet sind. Der Abstand der Linien voneinander ist dabei so gewählt, dass ein Punkt der einen Linie auch wieder im vorbestimmten Abstand zu einem Punkt der anderen Linie angeordnet ist. Der vorbestimmte Abstand weist hier eine mittlere Länge von etwa 500 µm auf. Hier handelt es sich um eine in Hinblick auf eine optimale Anbindung zwischen der Beschichtung 4 und Reibringoberfläche 2 optimierte Anordnung der Vertiefungen 3.

Zusammenfassend erbringt das erfindungsgemäße Aufrauverfahren mittels Elektronenstrahlen eine höchste Prozessgeschwindigkeit, während durch das Elektronenstrahlen eine höchste Flexibilität bei der Anordnung der aufgerauten Oberflächenkonturen ermöglicht wird. Die zu beschichtende Grenzfache wird deutlich erhöht, wodurch eine deutlich höhere Haftung zwischen der Beschichtung und Reibringoberfläche erreicht wird.

Durch die in den Bereichen der Vertiefungen erzeugten größeren Schichtdicken wird die Wärmeleitung von der von der Verschleißschutzschicht gebildeten Reibfläche in den Bremsscheibengrundkörper reduziert und damit die allgemeine Wärmebeständigkeit des Verbundsystems erhöht. Somit sind weder eine Haftungsschicht noch eine Wärmeisolierschicht zwischen Verschleißschutzschicht und Grundkörper notwendig.

Durch die gewählte Geometrie der Vertiefungen kann die ursprüngliche Beanspruchungsrichtung (Scherbeanspruchung) in der Beschichtung in eine Normalkraft- und Scherbeanspruchung umgesetzt werden.

Ferner ist ein gradueller Aufbau der zu spitzenden Beschichtung durch die Kontur der Vertiefungen nach dem Elektronenstrahlen gewährleistet. So ist auch die Rissgefahr bei den relativ dicken thermischen Beschichtungen nahezu ausgeschlossen. Die unmittelbar nach dem thermischen Spritzen der Beschichtung stattfindende Erstarrung verursacht sehr hohe Eigenspannungen bei größeren Schichtdicken, die in Folge Risse hervorrufen können. Der graduelle Aufbau der Beschichtung in der Kontur vermeidet dies.

So kann durch die ausgelegte Anordnung der Vertiefungen bzw. durch das Ausgleichen der Spannungsspitzen in der Beschichtung auch die mögliche Rissbildung bei höheren Bremsbeanspruchungen vermindert werden.

Schließlich kann die erfindungsgemäße Bremsscheibe günstig hergestellt werden, da als Material für den Grundkörper der Bremsscheibe kostengünstiger Grauguss verwendet werden kann. Die Beschichtung versieht die Bremsscheibe mit einer höheren Verschleißfestigkeit. Zudem kann dadurch eine Gewichtsreduzierung und eine Korrosionsreduzierung der Bremsscheibe erreicht werden. Ferner bietet die Beschichtung einen gleichmäßigen Reibwert der Bremsscheibe und eine Reduzierung beim Bremsen auftretender Temperaturen, wodurch das so genannte Bremsenfading, d. h. ein Ausfall der Bremse aufgrund Überhitzung vermieden werden kann. Schließlich kann durch eine mit der Beschichtung erzielte Reduzierung von Vibrationen und Geräuschen beim Bremsen eine Komfortsteigerung erzielt werden.

## Patentansprüche

1. Verfahren zur Herstellung einer Bremsscheibe aus einem Grundkörper (1), der eine Reibringoberfläche (2) aufweist,
umfassend die Schritte
- Bereitstellen des Grundkörpers (1) und Aufrauen der Reibringoberfläche (2) durch Richten eines Elektronenstrahls (5) auf die Reibringoberfläche (2), dabei Erzeugen in der Reibringoberfläche (2) einer definierten Anzahl von Vertiefungen (3) pro mm² Reibringoberfläche (2), wobei die Anordnung der Vertiefungen (3) zueinander vorbestimmt ist und wobei jede Vertiefung (3) eine vorbestimmte Tiefe und Form aufweist,
- ohne Ausführung eines Ätzschrittes Aufbringen einer Reibringoberflächenbeschichtung (4).

2. Verfahren nach Anspruch 1,
**dadurch gekennzeichnet, dass**
der Elektronenstrahl (5) ein scharf gebündelter und hoch beschleunigter Elektronenstrahl (5) ist und dass die Bestrahlung der Reibringoberfläche (2) unter einer sauerstoffarmen Atmosphäre, insbesondere in Inertgasatmosphäre erfolgt.

3. Verfahren nach Anspruch 1 oder 2,
**dadurch gekennzeichnet, dass**
das Aufbringen der Reibringoberflächenbeschichtung (4) mittels Hochgeschwindigkeitsflammspritzen, Plasmaspritzen, Kaltgasspritzen oder Lichtbogendrahtspritzen erfolgt.

4. Bremsscheibe aus einem Grundkörper (1) mit einer Reibringoberfläche (2), die mit einer Beschichtung (4) versehen ist,
**dadurch gekennzeichnet, dass**
die Reibringoberfläche (2) des Grundkörpers (1) eine vorbestimmte Anzahl pro mm² elektronengestrahlter Vertiefungen (3) aufweist, die gemäß einer vorbestimmten Anordnung zueinander auf der Reibringoberfläche (2) vorliegen, und wobei jede Vertiefung (3) eine vorbestimmte Tiefe und Form aufweist, und wobei die Beschichtung (4) zwischenschichtfrei mit den Vertiefungen (3) der Reibringoberfläche (4) eine kombinierte form- und stoffschlüssige Verbindung bildet.

5. Bremsscheibe nach Anspruch 4,
**dadurch gekennzeichnet, dass**
die Anzahl, die Form und die Tiefe der Vertiefungen (3) eine um das 2-6-facher vergrößerte Reibringoberfläche (2) im Vergleich zu einer Reibringoberfläche (2) ohne Vertiefungen aufweist.

6. Bremsscheibe nach Anspruch 4 oder 5,
**dadurch gekennzeichnet, dass**
der Grundkörper (1) aus einem metallischen Werkstoff, insbesondere aus einem Grauguss besteht, und die Beschichtung (4) der Reibringoberfläche (2), bezogen auf das Gesamtgewicht der Beschichtung,
- 70 - 85 Gew.-% WC, 7 - 12 Gew.-% Co, 3 - 5 Gew.-% Cr, 0,5 - 2 Gew.-% Ni,
oder
- 75 - 85 Gew.-% WC, 7 - 12 Gew.-% Co, 3 - 5 Gew.-% Cr, 0,001 - 1 Gew.-% Ni,
oder
- 65 - 85 Gew.-% WC, 15 - 30 Gew.-% Chromcarbid, insbesondere Cr₃C₂, , 5 - 12 Gew.-% Ni, oder
- 70 - 75 Gew.-% WC, 18 - 22 Gew.-% Cr₃C₂, 5-8 Gew.-% Ni,
sowie Verunreinigungen aufweist.

7. Bremsscheibe nach Anspruch 4 oder 5,
**dadurch gekennzeichnet, dass**
der Grundkörper (1) aus einem metallischen Werkstoff, insbesondere aus einem Grauguss besteht, und die Beschichtung (4) der Reibringoberfläche (2) aus Oxidkeramik, insbesondere ausgewählt aus der Gruppe Al₂O₃, ZrO₂, MgO und/oder TiO₂ und Metall, insbesondere Cr/Ni-Stahl, besteht.

## Claims

1. Method for manufacturing a brake disc from a basic body (1), having a friction ring surface (2),
comprising the steps:
- preparing the basic body (1) and roughening the friction ring surface (2) by directing an electron beam (5) onto the friction ring surface (2), thereby producing in the friction ring surface (2) a defined number of depressions (3) per mm² of the friction ring surface (2), wherein the arrangement of the depressions (3) relative to each other is predefined and wherein each depression (3) has a predefined depth and shape,
- applying a friction ring surface coating (4) without performing an etching step.

2. Method according to claim 1,
**characterised in that**
the electron beam (5) is a sharply focussed and highly accelerated electron beam (5) and the irradiation of the friction ring surface (2) is realised in a low-oxygen atmosphere, in particular in an inert gas atmosphere.

3. Method according to claim 1 or 2,
**characterised in that**
the friction ring surface coating (4) is applied by means of high-speed flame spraying, plasma spraying, cold gas spraying or arc wire spraying.

4. Brake disc comprising a basic body (1) having a friction ring surface (2) which is provided with a coating (4),
**characterised in that**
the friction ring surface (2) of the basic body (1) has a predefined number of electron-irradiated depressions (3) per mm² which are present in a predefined arrangement relative to each other on the friction ring surface (2), and wherein each depression (3) has a predefined depth and shape and wherein the coating (4) forms a combined shape-locking and material-locking connection with the depressions (3) of the friction ring surface (4) without an intermediate layer.

5. Brake disc according to claim 4,
**characterised in that**
the number, shape and depth of the depressions (3) results in a 2 to 6 times larger friction ring surface (2) in comparison with a friction ring surface (2) without depressions.

6. Brake disc according to claim 4 or 5,
**characterised in that**
the basic body (1) consists of a metal material, in particular a grey cast iron, and the coating (4) of the friction ring surface (2), with respect to the total weight of the coating, has
- 70-85 wt. % WC, 7-12 wt. % Co, 3-5 wt. % Cr, 0.5-2 wt. % Ni,
or
- 75-85 wt. % WC, 7-12 wt. % Co, 3-5 wt. % Cr, 0.001-1 wt. % Ni,
or
- 65-85 wt. % WC, 15-30 wt. % chromium carbide, in particular Cr₃C₂, 5-12 wt. % Ni,
or
- 70-75 wt. % WC, 18-22 wt. %, 5-8 wt. % Ni,
and impurities.

7. Brake disc according to claim 4 or 5,
**characterised in that**
the basic body (1) consists of a metal material, in particular a grey cast iron, and the coating (4) of the friction ring surface (2) consists of oxide ceramic, in particular selected from the group Al₂O₃, ZrO₂, MgO and / or TiO₂ and metal, in particular Cr/Ni steel.

## Revendications

1. Procédé de fabrication d'un disque de frein constitué d'un corps de base (1) comportant une surface annulaire de friction (2), comprend les étapes suivantes consistant à :
- fournir le corps de base (1) et rugosifier la surface annulaire de friction (2) en dirigeant un faisceau électronique (5) sur la surface annulaire de friction (2), un nombre défini d'évidements (3) au mm2 étant produit dans la surface annulaire de friction (2), l'agencement des évidements (3) étant prédéfini les uns par rapport aux autres et chaque évidement (3) présentant une profondeur et une forme prédéfinies,
- appliquer un revêtement de surface annulaire de friction (4) sans étape de décapage.

2. Procédé selon la revendication 1, **caractérisé en ce que** le faisceau électronique (5) est un faisceau électronique (5) fortement focalisé et hautement accéléré et **en ce que** le rayonnement de la surface annulaire de friction (2) s'effectue dans une atmosphère pauvre en oxygène, en particulier dans une atmosphère contenant un gaz inerte.

3. Procédé selon l'une quelconque des revendications 1 ou 2, **caractérisé en ce que** l'application (4) d'un revêtement de surface annulaire de friction s'effectua par projection à la flamme grande vitesse, par projection au plasma, par projection de gaz froid ou par projection arc fil.

4. Disque de frein constitué d'un corps de base (1) doté d'une surface annulaire de friction (2), laquelle étant pourvue d'un revêtement (4), **caractérisé en ce que** la surface annulaire de friction (2) du corps de base (1) présente un nombre prédéfini d'évidements (3) au mm2 soumis aux électrons qui sont présents selon un agencement prédéfini les uns par rapport aux autres sur la surface annulaire de friction (2), et chaque évidement (3) présentant une profondeur et une forme prédéfinies, et le revêtement (4) formant - exempt de couche intermédiaire - formant conjointement avec les évidements (3) de la surface annulaire de friction (4) une liaison combinée positive et assemblée par liaison de matière.

5. Disque de frein selon la revendication 4, **caractérisé en ce que** le nombre, la forme et la profondeur des évidements (3) présente une surface annulaire de friction (2) agrandie de 2 à 6 fois par rapport à une surface annulaire de friction (2) exempte d'évidements.

6. Disque de frein selon la revendication 4 ou la revendication 5, **caractérisé en ce que** le corps de base (1) est fabriqué en un matériau métallique, en particulier en fonte grise, et le revêtement (4) de la surface annulaire de friction (2), par rapport au poids total du revêtement, comprend
- entre 70 et 85 % en poids, de WC, entre 7 et 12 % en poids de Co, entre 3 et 5 % en poids de Cr, entre 0,5 et 2 % en poids de Ni,
ou
- entre 75 et 85 % en poids de WC, entre 7 et 12 % en poids de Co, entre 3 et 5 % en poids de Cr, entre 0,001 et 1 % en poids de Ni,
ou
- entre 65 et 85 % en poids de WC, entre 15 et 30 % en poids de carbure de chrome, en particulier Cr₃C₂, entre 5 et 12 % en poids de Ni, ou
- entre 70 et 75 % en poids de WC, entre 18 et 22 %, 5 et 8 % en poids de Ni, ainsi que des impuretés.

7. Disque de frein selon la revendication 4 ou la revendication 5, **caractérisé en ce que** le corps de base (1) est fabriqué en un matériau métallique, en particulier en fonte grise, et le revêtement (4) de la surface annulaire de friction (2), est composé de céramique oxydée, en particulier sélectionnée parmi le groupe Al₂O₃ ZrO₂, MgO et/ou TiO₂ et en métal, en particulier de l'acier Cr/Ni.
